# EUROPEAN PATENT APPLICATION

(11) **EP 4 559 657 A1**
(43) Date of publication of application: **28.05.2025**
(21) Application number: 23842704.1
(22) Date of filing: 07.06.2023
(51) Int. Cl.: B29C 45/26, F16J 3/04, F16D 65/28, F16D 125/06, F16D 125/40, F16D 125/70, B60T 13/74, F16J 15/52, B29C 33/42

(54) **METHOD FOR MANUFACTURING ACTUATOR AND ACTUATOR CASE THEREOF, AND CORE FOR MANUFACTURING**

(30) Priority: 19.07.2022 JP 2022114949
(71) Applicant: Hitachi Astemo, Ltd., Ibaraki 312-8503 (JP)
(72) Inventor: MUSHA, Masumi, Hitachinaka-shi, Ibaraki 312-8503 (JP)
(74) Representative: Hoffmann Eitle
(86) International application number: PCT/JP2023/021132
(87) International publication number: WO 2024/018772

(57) **Abstract**

In an actuator case, a fitting groove into which a mounting portion of a boot is to be mounted is formed in an inner peripheral surface of an output hole so that the mounting portion can be protected from external shock, and formation of the fitting groove is enabled simultaneously with molding of the actuator case of a resin. A plurality of first protruding walls, each protruding radially inward, are formed on an outer end portion of the output hole so as to alternate with first gaps in a circumferential direction of the output hole. Further, a plurality of second protruding walls, each protruding radially inward, are formed on an inner end portion of the output hole so as to alternate with second gaps in the circumferential direction of the output hole. The first protruding walls and the second protruding walls are arranged so as to avoid overlapping with each other when the output hole is seen in plan view. The fitting groove into which the mounting portion of the boot is to be mounted is defined on the inner peripheral surface of the output hole by the first protruding walls and the second protruding walls.

## Description

### TECHNICAL FIELD

The present invention relates to: an actuator in which an actuator mechanism is housed in an actuator case made of a resin, an output member of the actuator mechanism is disposed so as to pass through an output hole of the actuator case, and a boot for covering an outer portion, which protrudes to an outside of the output hole, of the output member is mounted to the actuator case; a method of manufacturing the actuator case; and a core to be used for the manufacturing method.

### BACKGROUND ART

Such an actuator is already known, as disclosed in Patent Literature 1.

### CITATION LIST

### PATENT LITERATURE

PTL 1: WO 2019/187362 A1

### SUMMARY OF INVENTION

### TECHNICAL PROBLEM

In the actuator described in Patent Literature 1, when a boot is mounted to an actuator case, a mounting portion of the boot is mounted into a fitting groove. The fitting groove surrounding an output hole is formed in an outer peripheral surface of an annular protruding wall that is formed on an outer surface of the actuator case in a protruding manner. In this actuator, the mounting portion of the boot is exposed outside the actuator case. Thus, when the mounting portion is subjected to some shock, the mounting portion may be disengaged from the fitting groove.

The present invention has been made in view of the circumstances described above, and has an object to provide: an actuator in which a fitting groove into which a mounting portion of a boot is to be mounted is formed in an inner peripheral surface of an output hole of an actuator case so as to enable protection of the mounting portion from external shock and formation of the fitting groove is enabled simultaneously with molding of the actuator case of a resin; a method of manufacturing the actuator case; and a core for manufacturing.

### SOLUTION TO PROBLEM

In order to achieve the object described above, according to a first feature of the present invention, there is provided an actuator, including;
an actuator case made of a resin; and
an actuator mechanism housed in the actuator case,
wherein an output member of the actuator mechanism is disposed so as to pass through an output hole of the actuator case,
wherein a boot for covering an outer portion, which protrudes to an outside of the output hole, of the output member is mounted to the actuator case,
wherein a plurality of first protruding walls, each protruding radially inward from an inner peripheral surface of the output hole, are formed on an outer end portion of the output hole so as to alternate with first gaps in a circumferential direction of the output hole,
wherein a plurality of second protruding walls, each protruding radially inward from the inner peripheral surface of the output hole, are formed on an inner end portion of the output hole so as to alternate with second gaps in the circumferential direction of the output hole,
wherein the first protruding walls and the second protruding walls are arranged so as to avoid overlapping with each other when the output hole is seen in plan view, and
wherein a fitting groove into which a mounting portion of the boot is to be mounted is defined on the inner peripheral surface of the output hole by the first protruding walls and the second protruding walls.

The output member corresponds to an output bolt 19 in an embodiment of the present invention, which is described later.

Further, according to a second feature of the present invention, in addition to the first feature, a width of each of the first gaps between the first protruding walls is set larger than a length of each of the second protruding walls in the circumferential direction of the output hole.

Further, according to a third feature of the present invention, in addition to the first feature, a protruding height of the second protruding walls is set larger than a protruding height of the first protruding walls, and the second protruding walls are configured to bear the mounting portion in a process of mounting the mounting portion into the fitting groove.

Further, according to a fourth feature of the present invention, in addition to the first feature, a length of each of the first protruding walls in the circumferential direction of the output hole is set smaller than a length of each of the second protruding walls in the circumferential direction of the output hole.

Further, according to a fifth feature of the present invention, in addition to any one of the first feature to the fourth feature, a reinforcing member is embedded in the mounting portion.

Further, according to a sixth feature of the present invention, there is provided a method of manufacturing an actuator case, the actuator case including:
an output hole formed so as to allow an output member to pass therethrough; and
a fitting groove into which a mounting portion of a boot for covering an outer portion, which protrudes to an outside of the output hole, of the output member is to be mounted,
the fitting groove being defined on an inner peripheral surface of the output hole by: a plurality of first protruding walls formed on an outer end portion of the output hole so as to protrude radially inward and alternate with first gaps in a circumferential direction of the output hole; and a plurality of second protruding walls formed on an inner end portion of the output hole so as to protrude radially inward and alternate with second gaps in the circumferential direction of the output hole,
the first protruding walls and the second protruding walls being arranged so as to avoid overlapping with each other when the output hole is seen in plan view,

the method including a step of molding the actuator case of a resin,
wherein, in the molding step,
   a core for forming an inner peripheral surface of the output hole is provided, and the core is formed by fitting a first core half body positioned on an outer end side of the output hole and a second core half body positioned on an inner end side of the output hole together so that the first core half body and the second core half body are separable in an axial direction,
   first recessed portions and second recessed portions for forming the first protruding walls and the second protruding walls, respectively, are defined between the first core half body and the second core half body, and
   the resin is injected into a cavity including the first recessed portions and the second recessed portions, which is defined by the first core half body and the second core half body and an outer die for forming an outer surface of the actuator case.

Further, according to a seventh feature of the present invention, there is provided a core to be used in the method of manufacturing an actuator, which has the six feature,
wherein the first core half body includes:
   a hollow cylindrical portion for forming an inner peripheral surface of the fitting groove; and
   a ceiling wall portion continuous with an outer end portion of the hollow cylindrical portion,
wherein groove portions corresponding to the first protruding walls are formed in the ceiling wall portion,
wherein cutouts corresponding to the gaps between the second protruding walls are formed in the hollow cylindrical portion,
wherein the second core half body includes:
   a first columnar portion to be fitted along an inner peripheral surface of the hollow cylindrical portion so as to be removable therefrom; and
   a second columnar portion continuous with the first columnar portion, the second columnar portion having a diameter larger than a diameter of the first columnar portion,
wherein ridges that define the first recessed portions in cooperation with the groove portions while being engaged with the cutouts are formed on the first columnar portion, and
wherein the second recessed portions are defined by a distal end surface of the hollow cylindrical portion, the ridges, and a step portion between the first columnar portion and the second columnar portion.

According to the first feature of the present invention, the plurality of first protruding walls, each protruding radially inward, are formed on the outer end portion of the output hole so as to alternate with the gaps in the circumferential direction of the output hole. Further, the plurality of second protruding walls, each protruding radially inward, are formed on the inner end portion of the output hole so as to alternate with the gaps in the circumferential direction of the output hole. The first protruding walls and the second protruding walls are arranged so as to avoid overlapping with each other when the output hole is seen in plan view, and the fitting groove into which the mounting portion of the boot is to be mounted is defined between the first protruding walls and the second protruding walls. Thus, at the time of molding of the actuator case of a resin, the first protruding walls and the second protruding walls are formed using the core that is divided in the axial direction inside the output hole, and the fitting groove can be defined by the first protruding walls and the second protruding walls. Thus, an additional process for forming the fitting groove is not required after the molding of the actuator case, and this can contribute to a reduction in manufacturing costs. In addition, the mounting portion of the boot, which is mounted in the fitting groove on the inner side of the output hole, can be protected from external shock so as to be prevented from being disengaged from the fitting groove.

According to the second feature of the present invention, the width of each of the first gaps between the first protruding walls is set larger than the length of each of the second protruding walls in the circumferential direction of the output hole. Thus, at the time of molding of the actuator case of a resin, the first protruding walls and the second protruding walls can easily and reliably be formed using the core that is divided in the axial direction inside the output hole.

According to the third feature of the present invention, the protruding height of the second protruding walls is set larger than the protruding height of the first protruding walls so that the mounting portion is borne by the second protruding walls in the process of mounting the mounting portion into the fitting groove. Thus, the mounting portion can easily be press-fitted and mounted into the fitting groove, and can also be prevented by the second protruding walls from being moved too far.

According to the fourth feature of the present invention, when the length of each of the first protruding walls in the circumferential direction of the output hole is set smaller than the length of each of the second protruding walls in the circumferential direction of the output hole, the mounting portion can further easily be press-fitted and mounted into the fitting groove. Further, after the mounting of the mounting portion, the mounting portion can be prevented by the first protruding walls from being disengaged from the fitting groove.

According to the fifth feature of the present invention, when the reinforcing member is embedded into the mounting portion, a force for press-fitting and mounting the mounting portion into the fitting groove is effectively increased to thereby be able to stabilize a mounted state of the mounting portion into the fitting groove.

According to the sixth feature of the present invention, at the time of molding of the actuator case, the output hole having the fitting groove can be formed by using the first core and the second core. Thus, after the molding, an additional process for obtaining the fitting groove is not required, and this can contribute to a reduction in manufacturing costs.

According to the seventh feature of the present invention, at the time of molding of the actuator case, the output hole having the fitting groove can be reliably formed by using the first core and the second core.

### BRIEF DESCRIPTION OF DRAWINGS

Fig. 1 is a longitudinal sectional side view of an actuator according to an embodiment of the present invention.
Fig. 2 is an enlarged view of an area 2 of Fig. 1 (an output bolt not shown).
Fig. 3 is a sectional view taken along the line 3-3 of Fig. 2.
Fig. 4 is a sectional view of a product and a molding die, for illustrating a method of molding a part of an actuator case around an output hole.
Fig. 5 is an exploded sectional view for illustrating the product and a core of Fig. 4.
Fig. 6 is a sectional view corresponding to Fig. 4, which is taken along a different line.
Fig. 7 is an exploded sectional view for illustrating the product and the core of Fig. 6.
Fig. 8 is an exploded perspective view for illustrating the product and the core.

### DESCRIPTION OF EMBODIMENTS

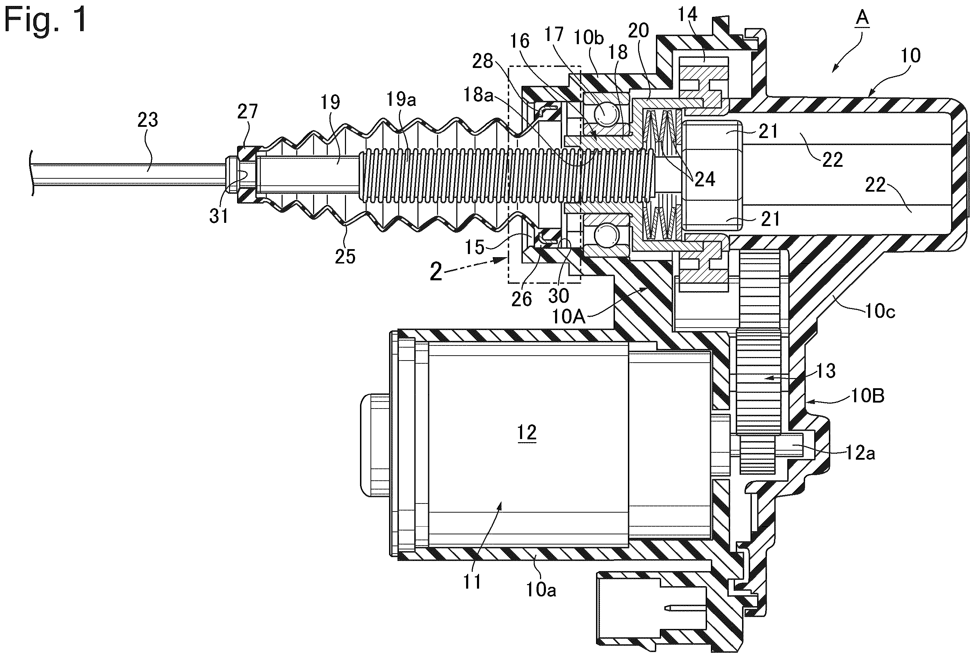

First, an embodiment of the present invention is described with reference to Fig. 1 attached hereto.

An actuator "A" includes an actuator case 10 and an actuator mechanism 11 housed in the actuator "A." With respect to the actuator "A," an extending direction of an output bolt 19, which is described later, from the actuator case 10 is referred to as "forward (front)," and a direction opposite thereto is referred to as "rearward (rear)."

The actuator case 10 includes a motor case part 10a having a cylindrical shape, an output case part 10b having a cylindrical shape, and a gear case part 10c. The output case part 10b is arranged adjacent to and in parallel to the motor case part 10a. The gear case part 10c connects a rear end portion of the motor case part 10a to an intermediate portion of the output case part. An output hole 15 is formed in a front end portion of the output case part 10b.

Further, this actuator case 10 is divided into a case main body 10A corresponding to a front half part and a case cover 10B corresponding to a rear half part so as to enable assembly and disassembly of the actuator mechanism 11. The case main body 10A and the case cover 10B are formed by injection molding of a resin.

The actuator mechanism 11 includes a motor 12, the output bolt 19, a speed-reduction gear train 13, and a motion conversion mechanism 16. The motor 12 is housed in the motor case part 10a. The output bolt 19 is disposed so as to protrude from the output case part 10b to an outside through the output hole 15. The speed-reduction gear train 13 is housed in the gear case part 10c and extends toward the output case part 10b. The speed-reduction rear train 13 reduces a speed of rotation of a rotor shaft 10a of the motor 12 and then transmits the rotation to a final gear 14. The motion conversion mechanism 16 is housed in the output case part 10b, and converts a rotational motion of the final gear 14 into an axial motion and then transmits the axial motion to the output bolt 19.

The motion conversion mechanism 16 includes a rotating nut 18 and a male thread 19a of the output bolt 19. The rotating nut 18 is rotatably and axially unmovably supported by the output case part 10b through intermediation of a bearing 17. The male thread 19a is threadably engaged with a female thread 18a of the rotating nut 18. A large-diameter cylindrical portion 20 is provided integrally and continuously with a rear end of the rotating nut 18 and is coupled to the final gear 14. Thus, the large-diameter cylindrical portion 20 can be rotated together with the final gear 14 but cannot be moved in an axial direction. Further, keys 21 protruding in a diametrical direction of the output bolt 19 are formed on a rear end portion of the output bolt 19. Key grooves 22 with which the keys 21 are to be slidably engaged are formed on the output case part 10b. Thus, the output bolt 19 is movable in its axial direction but is nonrotatable.

A distal end portion of the output bolt 19, which protrudes to the outside of the output hole 15, is connected to a parking brake mechanism (not shown) of a drum brake through intermediation of a cable 23.

A plurality of belleville springs 24, which are compressed by advancement of the keys 21, are housed in the large-diameter cylindrical portion 20 of the rotating nut 18.

Thus, when the motor 12 is actuated, and rotational power of its rotor shaft 10a is transmitted to the final gear 14 at a reduced speed via the gear train 13, the rotating nut 18 is rotated together with the final gear 14. Then, the female thread 18a of the rotating nut 18 being rotated applies a thrust force for advancing or retreating the output bolt 19 to the output bolt 19 via the male thread 19a in accordance with a forward or reverse rotating direction of the rotating nut 18. When the output bolt 19 is shifted rearward by the thrust force, the cable 23 is pulled to bring the parking brake mechanism (not shown) into a braking state. Further, when the output bolt 19 is shifted forward, the cable 23 is loosened to bring the parking brake mechanism into a brake release state. Under this brake release state, the belleville springs 24 are compressed between the rotating nut 18 and the keys 21, and a reaction force of the belleville springs 24 eliminates backlash between the female thread 18a and the male thread 19a.

A bellows-type boot 25 made of an elastic material is mounted to the output case part 10b so as to cover an outer part of the output bolt 19. The boot 25 is mounted in order to close the output hole 15 of the output case part 10b for the purpose of preventing dust and water.

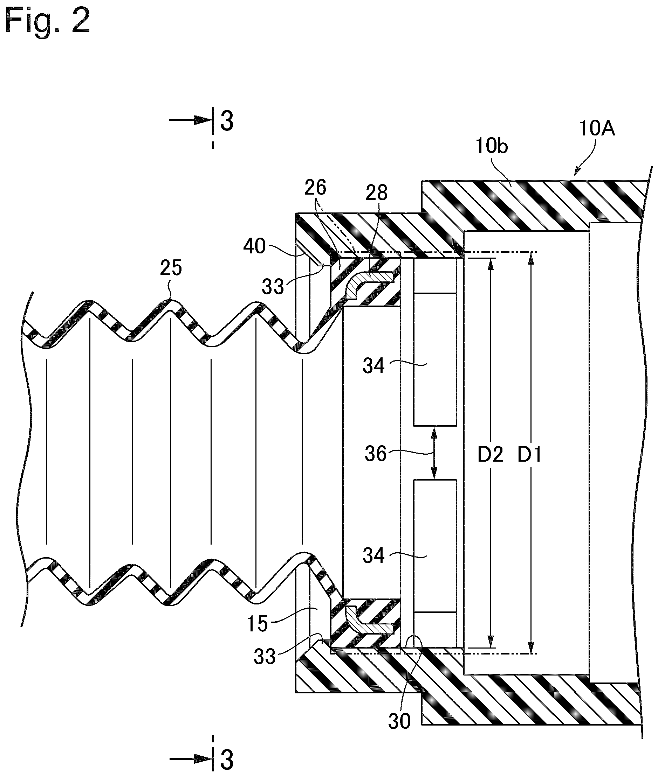

More specifically, as illustrated in Fig. 1 and Fig. 2, the boot 25 has a first mounting portion 26 with a larger diameter at one end part and a second mounting portion 27 with a smaller diameter at another end part. A reinforcing member 28 made of metal is embedded in the first mounting portion 26 having a larger diameter. This first mounting portion 26 is press-fitted and mounted into a fitting groove 30 formed on an inner peripheral surface of the output hole 15. Further, the second mounting portion 27 having a smaller diameter is mounted into an outer peripheral groove 31 of a distal end portion of the output bolt 19. In this manner, the first mounting portion 26 is one example of a mounting portion of the present invention.

A structure of the fitting groove 30 is described with reference to Fig. 2, Fig. 3, Fig. 5, and Fig. 8.

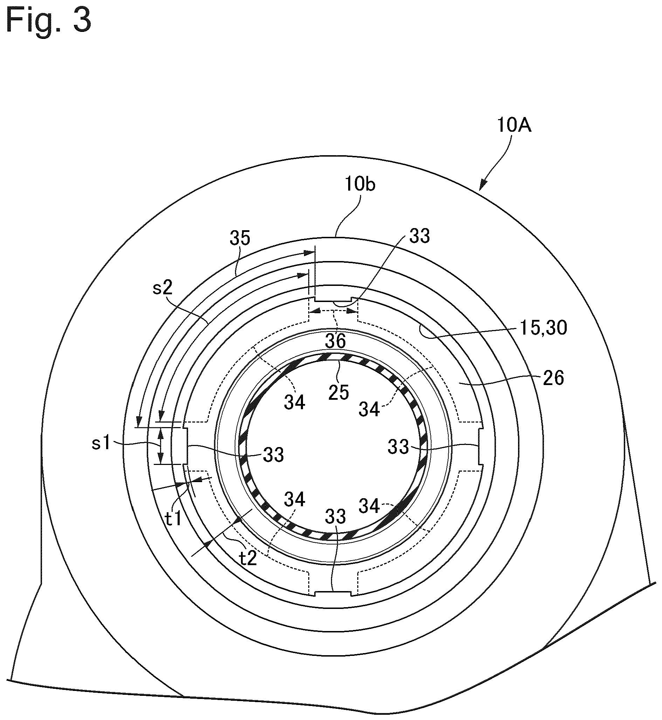

First, a plurality of (four in the illustrated example) first protruding walls 33 are formed on an outer end side of an inner peripheral surface of the output hole 15 so as to alternate with first gaps 35 in a circumferential direction of the output hole 15. The same number of second protruding walls 34 as the number of the first protruding walls 33, which protrude radially inward from the inner peripheral surface of the output hole 15, are formed on an inner end side of the inner peripheral surface of the output hole 15 so as to alternate with second gaps 26 in the circumferential direction of the output hole 15. In this case, the first protruding walls 33 and the second protruding walls 33 are arranged so as to avoid overlapping with each other when the output hole 15 is seen in plan view (see Fig. 3). In this manner, the first protruding walls 33 and the second protruding walls 34 define the fitting groove 30 on the inner peripheral surface of the output hole 15.

Further, a width of the first gap 35 between the first protruding walls 33 is set larger than a length s2 of the second protruding wall 34 in the circumferential direction of the output hole 15. This is equivalent to setting a width of the second gap 36 between the second protruding walls 34 larger than a length s1 of the first protruding wall 33 in the circumferential direction of the output hole 15.

Further, a protruding height t2 of the second protruding walls 34 from the inner peripheral surface of the output hole 15 (that is, a bottom surface of the fitting groove 30) is set larger than a protruding height t1 of the first protruding walls 33 from the inner peripheral surface of the output hole 15. This is equivalent to setting a diameter of an imaginary circle being in contact with distal end surfaces of all the second protruding walls 34 larger than a diameter of an imaginary circle being in contact with distal end surfaces of all the first protruding walls 33.

In addition, the length s1 of each of the first protruding walls 33 in the circumferential direction of the output hole 15 is set smaller than the length s2 of each of the second protruding walls 34 in the circumferential direction of the output hole 15.

Further, an inner diameter D2 of the fitting groove 30 is set slightly smaller than an outer diameter D1 of the first mounting portion 26.

A press-fit guide surface 40 having a tapered shape, which is continuous with outer end surfaces of the first protruding walls 33, is formed at an outer end rim of the output hole 15.

Next, actions of this embodiment are described.

In order to mount the first mounting portion 26 of the boot 25 into the fitting groove 30 of the output case part 10b, the first mounting portion 26 is press-fitted toward the tapered press-fit guide surface 40 of the output case part 10b. Then, the first mounting portion 26 is moved into the fitting groove 30 while being compressed in a radially contracting direction by the first protruding walls 33, and is borne by the second protruding walls 34 so as to be restrained from being moved too far. Further, the first mounting portion 26 is prevented by the first protruding walls 33 from being disengaged from the fitting groove 30. Besides, an initial load is applied to the first mounting portion 26 in the radially contracting direction by the bottom surface of the fitting groove 30 in the fitting groove 30. Thus, a stable mounted state without backlash can be achieved. In particular, the reinforcing member 28 is embedded in the first mounting portion 26. Thus, a reaction force to the press-fitting of the first mounting portion 26 into the fitting groove 30 can be effectively increased so as to be able to further stabilize the mounted state of the first mounting portion 26 in the fitting groove 30.

The plurality of first protruding walls 33 and the plurality of second protruding walls 34 that define the fitting groove 30 on the inner peripheral surface of the output hole 15 are arranged so as to avoid overlapping with each other when the output hole 15 is seen in plan view. As a result, as described later, a core that is divided into two portions in the axial direction is used at the time of molding of the case main body 10A to enable the molding thereof. Thus, a special additional process for forming the fitting groove 30 is not required, and this can contribute to a reduction in manufacturing costs. In addition, the first mounting portion 26 mounted in the fitting groove 30 formed on the inner side of the output hole 15 can be protected from external shock and thus, can be prevented from being disengaged from the fitting groove 30.

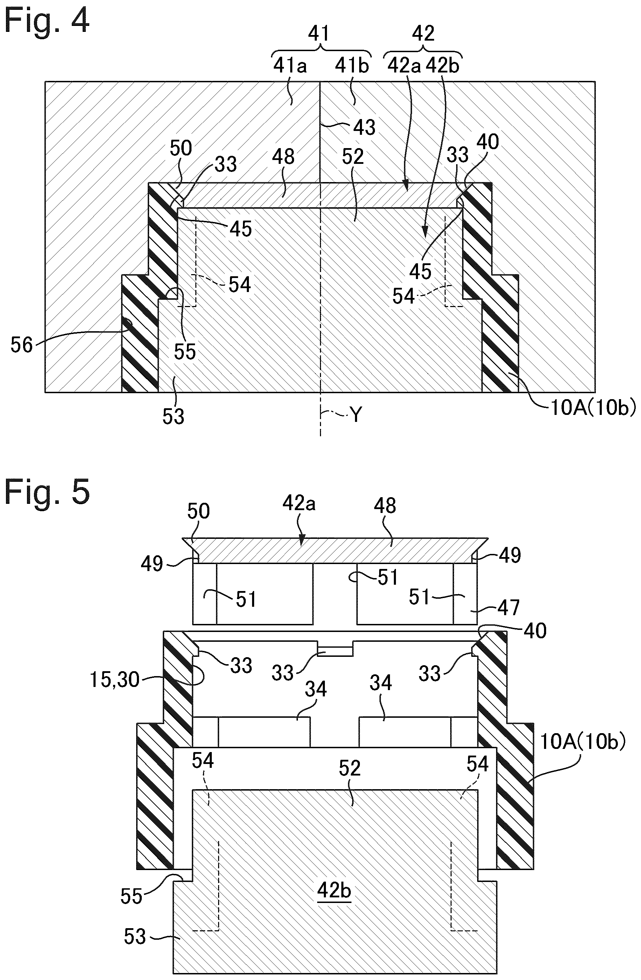

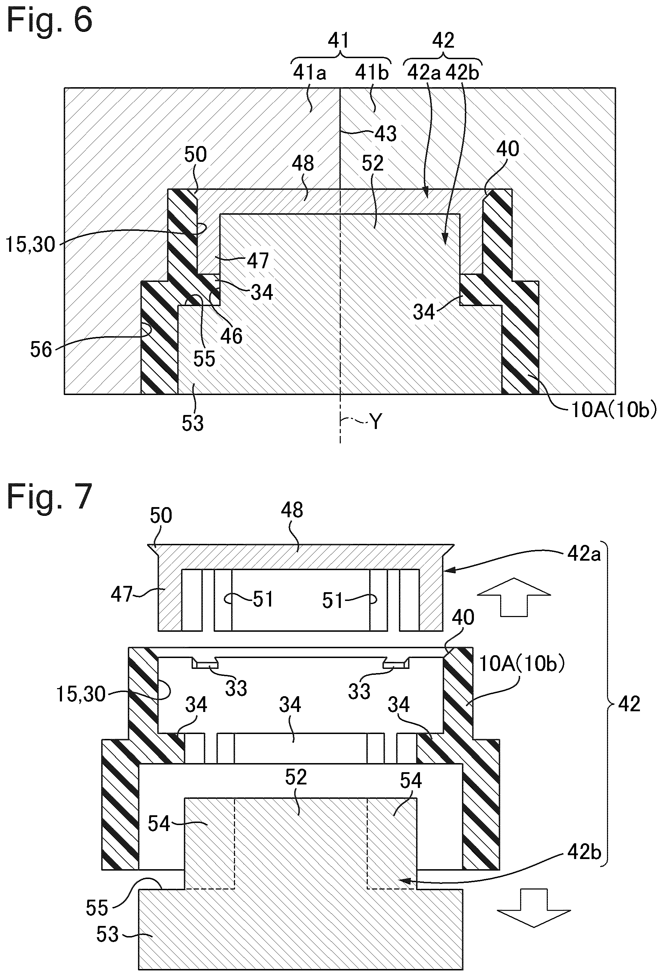

Next, a method of forming the case main body 10A, in particular, a front part of the output case part 10b having the output hole 15, the first protruding walls 33, the second protruding walls 34, and the fitting groove 30 by injection molding of a resin is described with reference to Fig. 4 to Fig. 8.

For the molding of the case main body 10A, an outer die 41 (see Fig. 4) for forming an outer surface of the case main body 10A and a core 42 (see Fig. 5, Fig. 7, and Fig. 8) for forming an inner peripheral surface of the output hole 15 are prepared.

The outer die 41 includes a first outer-die half body 41a and a second outer-die half body 41b, which are aligned in abutment relation with each other (or joined together) at a partition plane 43 passing through a center axis Y of the output hole 15 so as to be separable from each other. Further, the core 42 is formed by fitting a first core half body 42a and a second core half body 42b together so that the first half body 42a and the second core half body 42b are separable from each other in the axial direction. The first core half body 42a is positioned on the outer end side of the output hole 15, and the second core half body 42b is positioned on the inner end side of the output hole 15. First recessed portions 45 and second recessed portions 46 for forming the first protruding walls 33 and the second protruding walls 34, respectively, are defined between the first core half body 42a and the second core half body 42b in the following manner.

The first core half body 42a includes: a hollow cylindrical portion 47 for forming an inner peripheral surface of the fitting groove 30; and a ceiling wall portion 48 being continuous with an outer end portion of the hollow cylindrical portion 47. Groove portions 49 (see Fig. 5) corresponding to the first protruding walls 33 are formed in the ceiling wall portion 48. Further, a flange 50 having a triangular cross section for forming the press-fit guide surface 40 is formed at an outer end portion of the ceiling wall portion 48. Meanwhile, cutouts 51 corresponding to the second gaps 36 between the second protruding walls 34 are formed in the hollow cylindrical portion 47.

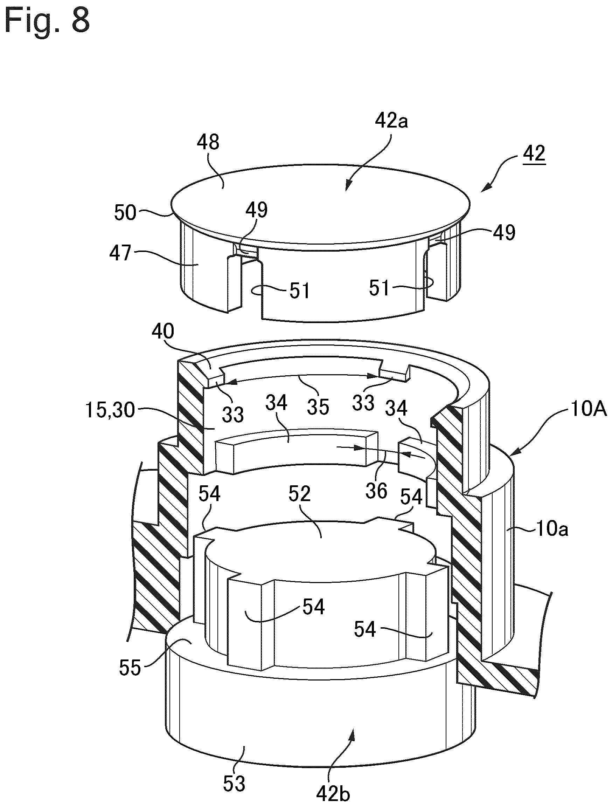

The second core half body 42b includes: a first columnar portion 52 to be fitted along an inner peripheral surface of the hollow cylindrical portion 47 so as to be removable therefrom; and a second columnar portion 53 continuous with the first columnar portion 52, which has a diameter larger than that of the first columnar portion 52. Ridges 54 (see Fig. 8) that define the first recessed portions 45 in cooperation with the groove portions 49 while being engaged with the cutouts 51 are formed on the first columnar portion 52. The second recessed portions 46 are defined by a distal end surface of the hollow cylindrical portion 47, the ridges 54, and a step portion 55 between the first columnar portion 52 and the second columnar portion 53.

Then, the first outer-die half body 41a and the second outer-die half body 41b are aligned in abutment relation with each other (or joined together) at the partition plane 43, and are clamped together. When the first core half body 42a and the second core half body 42b are fitted together inside the first outer-die half body 41a and the second outer-die half body 41b, a cavity 56 including the first recessed portions 45 and the second recessed portions 46 is defined between the first outer-die half body 41a and the second outer-die half body 41b and the first core half body 42a and the second core half body 42b. A resin is injected into the cavity 56 to thereby form the case main body 10A by molding. Simultaneously, the plurality of first protruding walls 33 and the plurality of second protruding walls 34, which define the fitting groove 30, and the press-fit guide surface 40 can be formed. Thus, after the molding of the case main body 10A, an additional process for forming the fitting groove 30 is not required. As a result, a reduction in manufacturing costs can be achieved.

The embodiment of the present invention has been described above. However, the present invention is not limited to the above-mentioned embodiment. Various changes in design can be made without departing from the present invention described in Claims.

The present application claims a priority based on Japanese Patent Application No. 2022-114949 filed on July 19, 2022. All disclosed contents including Specification, Scope of Claims, Drawings, and Abstract of Japanese Patent Application No. 2022-114949 filed on July 19, 2022 are incorporated herein by reference in their entirety.

### REFERENCE SIGNS LIST

A actuator
s1 length of first protruding wall
s2 length of second protruding wall
t1 height of first protruding wall
t2 height of second protruding wall
10 actuator case
11 actuator mechanism
15 output hole
19 output member (output bolt)
25 boot
26 first mounting portion serving as mounting portion
28 reinforcing member
30 fitting groove
33 first protruding wall
34 second protruding wall
35 first gap
36 second gap
41 outer die
41a first outer-die half body
41b second outer-die half body
42 core
42a first core half body
42b second core half body
45 first recessed portion
46 second recessed portion
47 hollow cylindrical portion
48 ceiling wall portion
49 groove portion
51 cutout
52 first columnar portion
53 second columnar portion
54 ridge
55 step portion
56 cavity

## Claims

1. An actuator, comprising;
an actuator case made of a resin; and
an actuator mechanism housed in the actuator case,
wherein an output member of the actuator mechanism is disposed so as to pass through an output hole of the actuator case,
wherein a boot for covering an outer portion, which protrudes to an outside of the output hole, of the output member is mounted to the actuator case,
wherein a plurality of first protruding walls, each protruding radially inward from an inner peripheral surface of the output hole, are formed on an outer end side of the output hole so as to alternate with first gaps in a circumferential direction of the output hole,
wherein a plurality of second protruding walls, each protruding radially inward from the inner peripheral surface of the output hole, are formed on an inner end side of the output hole so as to alternate with second gaps in the circumferential direction of the output hole,
wherein the first protruding walls and the second protruding walls are arranged so as to avoid overlapping with each other when the output hole is seen in plan view, and
wherein a fitting groove into which a mounting portion of the boot is to be mounted is defined on the inner peripheral surface of the output hole by the first protruding walls and the second protruding walls.

2. The actuator according to claim 1, wherein a width of each of the first gaps between the first protruding walls is set larger than a length of each of the second protruding walls in the circumferential direction of the output hole.

3. The actuator according to claim 1, wherein a protruding height of the second protruding walls is set larger than a protruding height of the first protruding walls, and the second protruding walls are configured to bear the mounting portion in a process of mounting the mounting portion into the fitting groove.

4. The actuator according to claim 1, wherein a length of each of the first protruding walls in the circumferential direction of the output hole is set smaller than a length of each of the second protruding walls in the circumferential direction of the output hole.

5. The actuator according to any one of claims 1 to 4, wherein a reinforcing member is embedded in the mounting portion.

6. A method of manufacturing an actuator case, the actuator case comprising:
an output hole formed so as to allow an output member to pass therethrough; and
a fitting groove into which a mounting portion of a boot for covering an outer portion, which protrudes to an outside of the output hole, of the output member is to be mounted,
the fitting groove being defined on an inner peripheral surface of the output hole by: a plurality of first protruding walls formed on an outer end portion of the output hole so as to protrude radially inward and alternate with first gaps in a circumferential direction of the output hole; and a plurality of second protruding walls formed on an inner end portion of the output hole so as to protrude radially inward and alternate with second gaps in the circumferential direction of the output hole,
the first protruding walls and the second protruding walls being arranged so as to avoid overlapping with each other when the output hole is seen in plan view,
the method comprising a step of molding the actuator case of a resin,
wherein, in the molding step,
a core for forming an inner peripheral surface of the output hole is provided, and the core is formed by fitting a first core half body positioned on an outer end side of the output hole and a second core half body positioned on an inner end side of the output hole together so that the first core half body and the second core half body are separable in an axial direction,
first recessed portions and second recessed portions for forming the first protruding walls and the second protruding walls, respectively, are defined between the first core half body and the second core half body, and
the resin is injected into a cavity including the first recessed portions and the second recessed portions, which is defined by the first core half body and the second core half body and an outer die for forming an outer surface of the actuator case.

7. A core to be used in the method of manufacturing an actuator case of claim 6,
wherein the first core half body includes:
a hollow cylindrical portion for forming an inner peripheral surface of the fitting groove; and
a ceiling wall portion continuous with an outer end portion of the hollow cylindrical portion,
wherein groove portions corresponding to the first protruding walls are formed in the ceiling wall portion,
wherein cutouts corresponding to the second gaps between the second protruding walls are formed in the hollow cylindrical portion,
wherein the second core half body includes:
a first columnar portion to be fitted along an inner peripheral surface of the hollow cylindrical portion so as to be removable therefrom; and
a second columnar portion continuous with the first columnar portion, the second columnar portion having a diameter larger than a diameter of the first columnar portion,
wherein ridges that define the first recessed portions in cooperation with the groove portions while being engaged with the cutouts are formed on the first columnar portion, and
wherein the second recessed portions are defined by a distal end surface of the hollow cylindrical portion, the ridges, and a step portion between the first columnar portion and the second columnar portion.
